# EUROPEAN PATENT APPLICATION

(11) **EP 4 047 393 A1**
(43) Date of publication of application: **24.08.2022**
(21) Application number: 19949376.8
(22) Date of filing: 15.10.2019
(51) Int. Cl.: G01S 13/93, G01S 7/02

(54) **RADAR DEVICE AND VEHICLE**

(71) Applicant: OMRON Corporation, Shiokoji-dori, Shimogyo-Ku Kyoto-shi Kyoto 600-8530 (JP)
(72) Inventor: TANIMOTO, Yudai, Kyoto-shi, Kyoto 600-8530 (JP)
(74) Representative: HGF
(86) International application number: PCT/JP2019/040448
(87) International publication number: WO 2021/074949

(57) **Abstract**

An antenna device has first and second radiation patterns different from each other, the first radiation pattern having a main lobe, and a side lobe with a first gain, and the second radiation pattern having a main lobe, and a side lobe with a second gain different from the first gain. The signal analyzer detects a first signal level of a radar wave received when the first radiation pattern is set for the antenna device, and detects a second signal level of a radar wave received when the second radiation pattern is set for the antenna device. When a difference between the first and second signal levels is smaller than a threshold, the obstacle identifier determines that the reflective object is an obstacle, and otherwise, the obstacle identifier determines that the reflective object is not an obstacle.

## Description

### TECHNICAL FIELD

The present disclosure relates to a radar apparatus to be mounted on a vehicular apparatus, and also relates to a vehicular apparatus provided with the radar apparatus.

### BACKGROUND ART

A vehicular apparatus, such as an automobile or an autonomous vehicle, may be provided with a radar apparatus in order to detect obstacles while moving. The radar apparatus receives and analyzes a radar wave emitted from the radar apparatus and reflected by a reflective object, thus estimating a distance and a direction (i.e., position) of the reflective object with respect to a position of the radar apparatus. When emitting a radar wave, the radar apparatus not only receives reflected waves from objects possibly serving as obstacles for the vehicular apparatus, but also, may additionally or alternatively receive reflected waves (clutter) from other structures not serving as obstacles for the vehicular apparatus, such as floor, wall, ceiling, ground, or water. In a case where signal levels of reflected waves from objects possibly serving as obstacles are not sufficiently large, or in a case where signal levels of reflected waves from other structures are not sufficiently small, it may be not possible to distinguish whether reflective objects detected by the radar apparatus are obstacles or other structures. Therefore, a radar apparatus capable of distinguishing obstacles from other structures is required.

For example, Patent Document 1 discloses a radar apparatus capable of removing clutter from a received radar wave, by increasing attenuation of the receiving intensity of the radar apparatus, as the direction of the transmitting or receiving beam of the radar apparatus approaches the sea surface and/or the ground surface.

In addition, Patent Document 2 discloses a radar apparatus capable of removing clutter from a received radar wave, using a filter having a variable cutoff frequency.

### CITATION LIST

### PATENT DOCUMENTS

PATENT DOCUMENT 1: Japanese Patent Laid-open Publication No. JP 2019-052937 A
PATENT DOCUMENT 2: Japanese Patent Laid-open Publication No. JP 2017-090294 A

### SUMMARY OF INVENTION

### TECHNICAL PROBLEM

When the receiving intensity of the radar wave is largely attenuated as disclosed in Patent Document 1, the radar wave is emitted to only a narrow range, thus narrowing the range in which obstacles can be detected. In addition, even if the receiving intensity of the radar wave is largely attenuated, the receiving intensity of the radar waves reflected by other structures does not become zero. Therefore, the obstacles may be indistinguishable from the other structures.

In addition, when a radar apparatus moves over time,
the position estimated based on a radar wave reflected by an obstacle is considered to have less randomness than the position estimated based on radar waves reflected by other structures, such as a floor. Random clutter can be removed using a filter as disclosed in Patent Document 2. However, radar waves reflected by other structures such as a floor do not necessarily have randomness, and therefore, it is not always possible to remove clutter using a filter. Therefore, the obstacles may be indistinguishable from the other structures.

An object of the present disclosure is to provide a radar apparatus capable of more reliably distinguishing obstacles from other structures than the prior art, without narrowing a range in which the obstacles can be detected. In addition, an object of the present disclosure is to provide a vehicular apparatus provided with such a radar apparatus.

### SOLUTION TO PROBLEM

According to a radar apparatus of an aspect of the present disclosure, the radar apparatus is provided with: an antenna device having variable directivity; a signal analyzer configured to detect a signal level of a radar wave transmitted via the antenna device, reflected by a reflective object, and then received via the antenna device, and determine a position of the reflective object with respect to a position of the antenna device; and an obstacle identifier configured to determine whether or not the reflective object is an obstacle, based on the signal level of the received radar wave, The antenna device has first and second radiation patterns different from each other, the first radiation pattern having a first main lobe in a first direction, and a first side lobe with a first gain in a second direction different from the first direction, and the second radiation pattern having a second main lobe in the first direction, and a second side lobe in the second direction with a second gain different from the first gain. The signal analyzer is configured to detect a first signal level indicating a signal level of a radar wave received when the first radiation pattern is set for the antenna device, and detect a second signal level indicating a signal level of a radar wave received when the second radiation pattern is set for the antenna device. When a difference between the first and second signal levels is smaller than a predetermined threshold, the obstacle identifier is configured to determine that the reflective object is an obstacle, and when the difference between the first and second signal levels is equal to or larger than the threshold, the obstacle identifier is configured to determine that the reflective object is not an obstacle.

With this configuration, by referring to the signal levels of the radar waves received when the first and second radiation patterns different from each other are set for the antenna device, respectively, it is possible to more reliably distinguish obstacles from other structures than the prior art, without narrowing a range in which the obstacles can be detected.

According to the radar apparatus of the aspect of the present disclosure, the first radiation pattern further has a third side lobe with a third gain in a third direction different from the first and second directions, and the second radiation pattern further has a fourth side lobe in the third direction with a fourth gain different from the third gain.

With this configuration, it is possible to identify other structures having a surface parallel to the moving direction of the vehicular apparatus, over a wider angular range.

According to the radar apparatus of the aspect of the present disclosure, the antenna device further has a third radiation pattern different from the first and second radiation patterns, the first radiation pattern further having a fifth side lobe with a third gain in a third direction different from the first and second directions, and the third radiation pattern having a third main lobe in the first direction, a sixth side lobe in the second direction, and a seventh side lobe in the third direction with a fourth gain different from the third gain. The signal analyzer is configured to detect a third signal level indicating a signal level of a radar wave received when the third radiation pattern is set for the antenna device. When differences among the first to third signal levels are smaller than the threshold, the obstacle identifier is configured to determine that the reflective object is an obstacle, and when the differences among the first to third signal levels are equal to or larger than the threshold, the obstacle identifier is configured to determine that the reflective object is not an obstacle.

With this configuration, it is possible to identify other structures having a surface parallel to the moving direction of the vehicular apparatus, over a wider angular range.

According to a vehicular apparatus of an aspect of the present disclosure, the vehicular apparatus is provided with the radar apparatus of the aspect of the present disclosure.

With this configuration, since the vehicular apparatus is provided with the radar apparatus of the aspect of the present disclosure, and refers to the signal levels of the radar waves received when the first and second radiation patterns different from each other are set for the antenna device, respectively, it is possible to more reliably distinguish obstacles from other structures than the prior art, without narrowing a range in which the obstacles can be detected.

According to the vehicular apparatus of the aspect of the present disclosure, the antenna device is mounted on the vehicular apparatus such that a main lobe of the antenna device is parallel to a moving direction of the vehicular apparatus. When a difference between the first and second signal levels is equal to or larger than a predetermined threshold, the obstacle identifier determines that the reflective object is not an obstacle, but a structure having a surface substantially parallel to the moving direction of the vehicular apparatus.

With this configuration, it is possible to distinguish obstacles from, for example, floor, ground, wall, ceiling, and the like.

### ADVANTAGEOUS EFFECTS OF INVENTION

According to the radar apparatus and the vehicular apparatus of the aspects of the present disclosure, it is possible to more reliably distinguish obstacles from other structures than the prior art, without narrowing a range in which the obstacles can be detected.

### BRIEF DESCRIPTION OF DRAWINGS

Fig. 1 is a block diagram illustrating a configuration of a system including a vehicular apparatus 1 and a server apparatus 2 according to an embodiment.
Fig. 2 is a block diagram illustrating an exemplary configuration of a transmitting antenna 31 of Fig. 1.
Fig. 3 is a block diagram illustrating an exemplary configuration of a receiving antenna 32 of Fig. 1.
Fig. 4 is a side view illustrating a radiation pattern P1 set for an antenna device 30 of Fig. 1.
Fig. 5 is a side view illustrating a radiation pattern P2 set for the antenna device 30 of Fig. 1.
Fig. 6 is a graph showing frequency variations of radar waves over time in a radar apparatus 12 of Fig. 1, for a radar wave transmitted from the transmitting antenna 31, and a radar wave received by the receiving antenna 32.
Fig. 7 is a graph showing frequency variations over time for an output signal of a mixer 34 of Fig. 1.
Fig. 8 is a graph showing frequency characteristics of the output signal of the mixer 34 of Fig. 1.
Fig. 9 is a diagram for explaining a schematic operation of the radar apparatus 12 of Fig. 1.
Fig. 10 is a waveform diagram illustrating waveforms of radar waves reflected by an obstacle 100 and a floor 101 of Fig. 9.
Fig. 11 is a waveform diagram illustrating waveforms of radar waves received with the radiation patterns P1 and P2 being set for the antenna device 30, respectively, when the obstacle 100 of Fig. 9 exists.
Fig. 12 is a waveform diagram illustrating waveforms of radar waves received with the radiation patterns P1 and P2 being set for the antenna device 30, respectively, when the obstacle 100 of Fig. 9 does not exist.
Fig. 13 is a flowchart illustrating obstacle detection process executed by the radar apparatus 12 of Fig. 1.
Fig. 14 is a side view illustrating a radiation pattern P11 set for the antenna device 30 of Fig. 1.
Fig. 15 is a side view illustrating a radiation pattern P12 set for the antenna device 30 of Fig. 1.
Fig. 16 is a side view illustrating a radiation pattern P21 set for the antenna device 30 of Fig. 1.
Fig. 17 is a side view illustrating a radiation pattern P22 set for the antenna device 30 of Fig. 1.
Fig. 18 is a side view illustrating a radiation pattern P23 set for the antenna device 30 of Fig. 1.
Fig. 19 is a top view illustrating a radiation pattern P31 set for the antenna device 30 of Fig. 1.
Fig. 20 is a top view illustrating a radiation pattern P32 set for the antenna device 30 of Fig. 1.
Fig. 21 is a top view illustrating a radiation pattern P33 set for the antenna device 30 of Fig. 1.
Fig. 22 is a circuit diagram illustrating a modified embodiment of the receiving antenna 32 of Fig. 1.
Fig. 23 is a block diagram illustrating a modified embodiment of the radar apparatus 12 of Fig. 1.

### DESCRIPTION OF EMBODIMENTS

Hereinafter, an embodiment according to one aspect of the present disclosure (hereinafter, also referred to as "the present embodiment") will be described with reference to the drawings. In the drawings, the same reference signs denote similar components.

### [APPLICATION EXAMPLE]

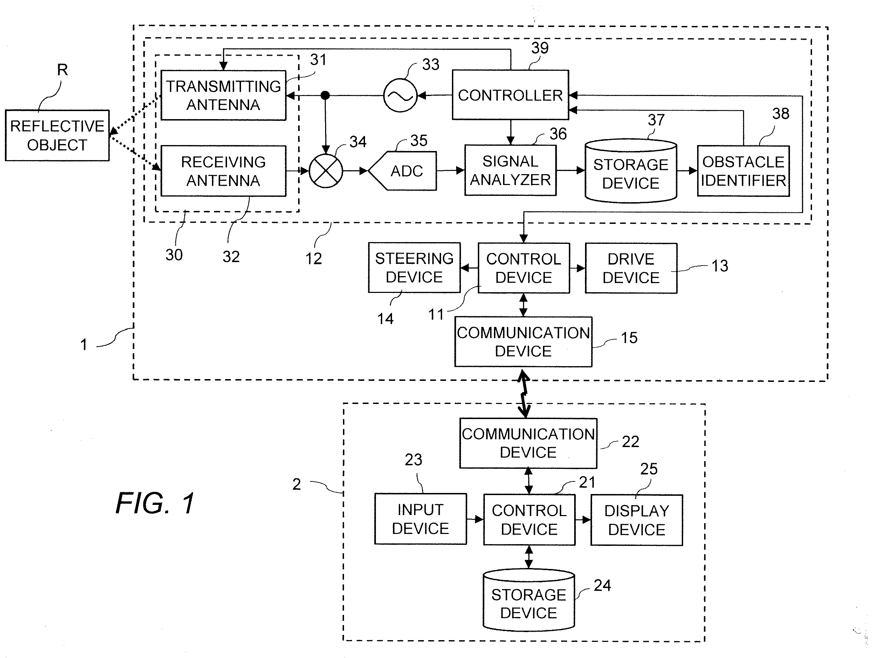

Fig. 1 is a block diagram illustrating a configuration of a system including a vehicular apparatus 1 and a server apparatus 2 according to the embodiment. The vehicular apparatus 1 is, for example, an autonomous vehicle operable under the control of the server apparatus 2, which is called an automatic guided vehicle (AGV) or an autonomous intelligent vehicle (AIV). A radar apparatus 12 is mounted on the vehicular apparatus 1.

The radar apparatus 12 of Fig. 1 is provided with, at least, an antenna device 30, a signal analyzer 36, and an obstacle identifier 38.

The antenna device 30 has variable directivity. The antenna device 30 has first and second radiation patterns different from each other. The first radiation pattern has a main lobe in a first direction, and a first side lobe with a first gain in a second direction different from the first direction. The second radiation pattern has a main lobe in the first direction, and a second side lobe in the second direction with a second gain different from the first gain.

The signal analyzer 36 detects a signal level of a radar wave transmitted via the antenna device 30, reflected by a reflective object R, and then received via the antenna device 30, and determines the position of the reflective object R with respect to the position of the antenna device 30. The signal analyzer 36 detects a first signal level indicating a signal level of a radar wave received when the first radiation pattern is set for the antenna device 30, and detects a second signal level indicating a signal level of a radar wave received when the second radiation pattern is set for the antenna device 30.

The obstacle identifier 38 determines whether or not the reflective object R is an obstacle, based on the signal level of the received radar wave. When the difference between the first and second signal levels is smaller than a predetermined threshold, the obstacle identifier 38 determines that the reflective object R is an obstacle, and otherwise, the obstacle identifier 38 determines that the reflective object R is not an obstacle.

The obstacle is, for example, a structure having a surface crossing a moving direction of the vehicular apparatus 1. On the other hand, other structures having a surface parallel to the moving direction of the vehicular apparatus 1, such as floor, ground, wall, ceiling, and the like, are not obstacles for the vehicular apparatus. However, as described above, the radar apparatus 12 may receive reflected waves (clutter) from such other structures. According to the radar apparatus 12 of the embodiment, by referring to the signal levels of the radar waves received when the first and second radiation patterns different from each other are set for the antenna device 30, respectively, it is possible to more reliably distinguish the obstacles from other structures than the prior art, without narrowing the range in which the obstacles can be detected.

The antenna device 30 may be mounted on the vehicular apparatus 1, for example, such that the main lobe of the antenna device 30 is parallel to the moving direction of the vehicular apparatus 1. In this case, when the difference between the first and second signal levels is equal to or larger than a predetermined threshold, the obstacle identifier 38 can determine that the reflective object R is not an obstacle, but a structure having a surface substantially parallel to the moving direction of the vehicular apparatus 1.

### [EMBODIMENT]

### [CONFIGURATION EXAMPLE OF EMBODIMENT]

The radar apparatus 12 of Fig. 1 is provided with the antenna device 30, a signal generator 33, a mixer 34, an analog/digital (AD) converter 35, the signal analyzer 36, a storage device 37, an obstacle identifier 38, and a controller 39.

The antenna device 30 is provided with a transmitting antenna 31 and a receiving antenna 32.

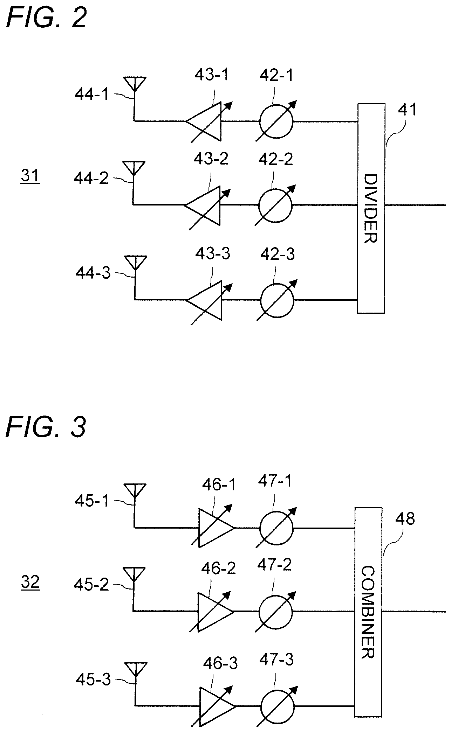

Fig. 2 is a block diagram illustrating an exemplary configuration of the transmitting antenna 31 of Fig. 1. The transmitting antenna 31 of Fig. 2 is provided with a divider 41, a plurality of phase shifters 42-1 to 42-3, a plurality of amplifiers 43-1 to 43-3, and a plurality of antenna elements 44-1 to 44-3. The divider 41 divides a radio frequency signal sent from the signal generator 33, according to the number of antenna elements 44-1 to 44-3. The phase shifters 42-1 to 42-3 change the phases of the radio frequency signals sent from the divider 41, with variable phase shifts, respectively. The amplifiers 43-1 to 43-3 amplify output signals of the phase shifters 42-1 to 42-3, with variable gains. The antenna elements 44-1 to 44-3 emit output signals of the amplifiers 43-1 to 43-3. The antenna elements 44-1 to 44-3 have the same characteristics, and are arranged at predetermined intervals. The first and second radiation patterns different from each other can be set for the transmitting antenna 31, by changing the phase shifts of the phase shifters 42-1 to 42-3 and the gains of the amplifiers 43-1 to 43-3 under the control of the controller 39. Thus, the transmitting antenna 31 of Fig. 2 operates as a phased array antenna.

Fig. 3 is a block diagram illustrating an exemplary configuration of the receiving antenna 32 of Fig. 1. The receiving antenna 32 of Fig. 3 is provided with a plurality of antenna elements 45-1 to 45-3, a plurality of amplifiers 46-1 to 46-3, a plurality of phase shifters 47-1 to 47-3, and a combiner 48. The antenna elements 45-1 to 45-3 have the same characteristics, and are arranged at predetermined intervals. The amplifiers 46-1 to 46-3 amplify received signals of the antenna elements 45-1 to 45-3, with variable gains. The phase shifters 47-1 to 47-3 change the phases of the received signals of the antenna elements 45-1 to 45-3, with variable phase shifts. The combiner 48 combines the plurality of received signals having the changed amplitude and phase, and outputs the combined received signals to a subsequent circuit. The first and second radiation patterns different from each other can be set for the receiving antenna 32, by changing the gains of the amplifiers 46-1 to 46-3 and the phase shifts of the phase shifters 47-1 to 47-3 under the control of the controller 39. Thus, the receiving antenna 32 of Fig. 3 operates as a phased array antenna.

When the radar wave is transmitted from the antenna device 30, reflected by the reflective object R, and then received by the antenna device 30, for example, the same radiation pattern may be set for the transmitting antenna 31 and the receiving antenna 32.

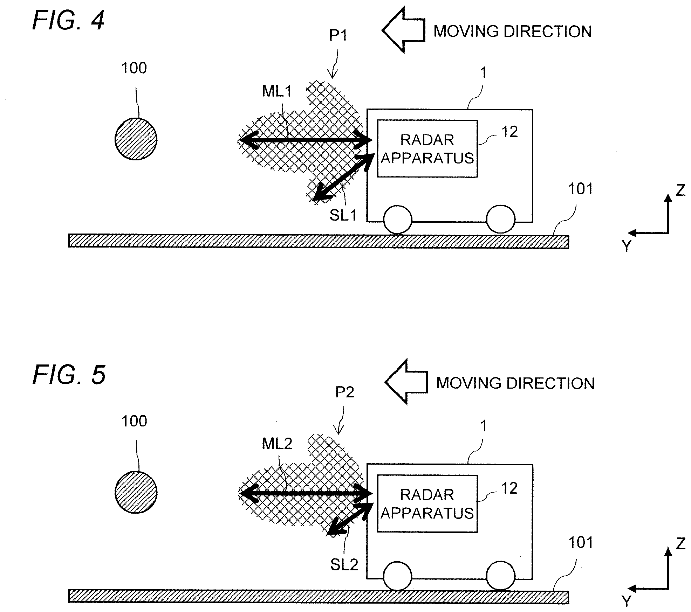

Fig. 4 is a side view illustrating a radiation pattern P1 set for the antenna device 30 of Fig. 1. Fig. 5 is a side view illustrating a radiation pattern P2 set for the antenna device 30 of Fig. 1. In each drawing illustrating the radiation pattern of the antenna device 30, such as Figs. 4 to 5, the length of the thick arrow indicates the gain of the antenna device 30 in a certain direction.

Referring to Fig. 4, the first radiation pattern P1 has a main lobe ML1 in a first direction, and a side lobe SL1 with a first gain in a second direction different from the first direction. Referring to Fig. 5, the second radiation pattern P2 has a main lobe ML2 in the first direction, and a side lobe SL2 in the second direction with a second gain different from the first gain.

In the radiation patterns P1 and P2, each of the main lobes ML1 and ML2 indicates a certain angular range including an azimuth angle at which the gain is maximized. In the radiation patterns P1 and P2, each of the side lobes SL1 and SL2 indicates a certain angular range including an azimuth angle at which the gain is the second largest after that of the main lobes ML1 and ML2. The radiation patterns P1 and P2 are set such that the gains of the main lobes ML1 and ML2 are sufficiently larger than the gains of the side lobes SL1 and SL2.

The examples of Figs. 4 and 5 illustrate a case where the gains of the main lobes ML1 and ML2 of the radiation patterns P1 and P2 are substantially equal to each other. In addition, the examples of Figs. 4 and 5 illustrate a case where the gain of the side lobe SL2 of the radiation pattern P2 is smaller than the gain of the side lobe SL1 of the radiation pattern P1.

In addition, the examples of Figs. 4 and 5 illustrate a case where the antenna device 30 is mounted on the vehicular apparatus 1 such that the main lobes ML1 and ML2 of the antenna device 30 are parallel to the moving direction of the vehicular apparatus 1. In addition, the examples of Figs. 4 and 5 illustrate a case where the antenna device 30 is mounted on the vehicular apparatus 1 such that the side lobes SL1 and SL2 of the antenna device 30 are directed downward to a floor 101 in front of the vehicular apparatus 1.

At predetermined time intervals, the signal generator 33 generates a radio frequency signal for detecting the reflective object R, and supplies the radio frequency signal to the transmitting antenna 31 and the mixer 34, under the control of the controller 39. The signal generator 33 generates, for example, a chirp signal having a frequency gradually increasing or decreasing over time.

The transmitting antenna 31 emits the radio frequency signal supplied by the signal generator 33, as a radar wave, toward a space to be searched. The receiving antenna 32 receives the radar wave reflected by the reflective object R, and sends the radar wave to the mixer 34.

The mixer 34 mixes the signals sent from the signal generator 33 and the receiving antenna 32, and sends the mixed signal to the AD converter 35. The vehicular apparatus 1 may convert the signal frequency from the radio frequency to a baseband frequency, before sending the signal mixed by the mixer 34 to the AD converter 35.

The AD converter 35 converts the analog signal sent from the mixer 34, into a digital signal, and sends the digital signal to the signal analyzer 36.

A set of the antenna device 30, the signal generator 33, the mixer 34, and the AD converter 35 is an example of a transceiver. The vehicular apparatus 1 may be provided with a transceiver of another form. In addition, the vehicular apparatus 1 may be provided with other circuits, such as a radio frequency amplifier.

Based on the signal sent from the AD converter 35 (that is, a signal corresponding to the received radar wave), the signal analyzer 36 detects the signal level of the received radar wave, and determines the position of the reflective object R with respect to the position of the antenna device 30 (that is, the position of the radar apparatus 12), under the control of the controller 39. The signal analyzer 36 converts the signal corresponding to the received radar wave, from time domain to frequency domain, for example, using a fast Fourier transform, and detects a signal level of the received radar wave in the frequency domain. The signal analyzer 36 detects the frequency of the received radar wave, and estimates the distance from the radar apparatus 12 to the reflective object R, based on the difference between the frequency of the transmitted radar wave and the frequency of the received radar wave. Furthermore, the signal analyzer 36 transmits and receives radar waves while changing the direction of the main lobe of the antenna device 30, and estimates the direction of arrival of the received radar waves (that is, the direction of the reflective object R with respect to the radar apparatus 12). The signal analyzer 36 determines the position of the reflective object R by estimating the distance and the direction of arrival.

The signal analyzer 36 may estimate a distance or a direction of arrival, based on a signal portion at a certain time moment or interval, among signals corresponding to the received radar waves, and process the estimated distance or direction of arrival, and a signal strength of the signal portion, in association with each other. In this case, the signal analyzer 36 may determine the distance or the direction of arrival estimated based on the signal portion having the signal intensity equal to or larger than a predetermined threshold, as the distance or the direction of arrival of the reflective object R. In addition, the signal analyzer 36 may determine the distance or the direction of arrival of the reflective object R by performing constant false alarm rate receiving process. Furthermore, the signal analyzer 36 may determine the distance or the direction of arrival of the reflective object R, by clustering a plurality of estimated distances or directions of arrival.

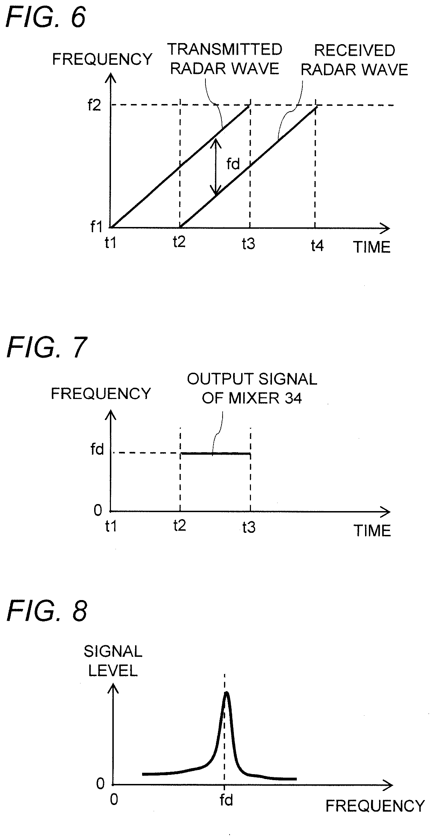

Fig. 6 is a graph showing frequency variations of radar waves over time in the radar apparatus 12 of Fig. 1, for the radar wave transmitted from the transmitting antenna 31, and the radar wave received by the receiving antenna 32. The example of Fig. 6 illustrates a case where the signal generator 33 generates a chirp signal having a frequency linearly increasing over time from a frequency f1 to a frequency f2. The frequency of the received radar wave changes from the frequency of the transmitted radar wave, with a delay time corresponding to the distance from the radar apparatus 12 to the reflective object R. Therefore, a difference fd between the frequency of the transmitted radar wave and the frequency of the received radar wave changes according to the distance from the radar apparatus 12 to the reflective object R. As the distance increases, the frequency difference fd also increases, and as the distance decreases, the frequency difference fd also decreases. In a time interval from time t2 to time t3, the frequency difference fd is constant.

Fig. 7 is a graph showing frequency variations over time for an output signal of the mixer 34 of Fig. 1. Since the transmitted radio frequency signal and the received radio frequency signal are mixed by the mixer 34, the output signal of the mixer 34 has a constant frequency fd.

Fig. 8 is a graph showing frequency characteristics of the output signal of the mixer 34 of Fig. 1. Fig. 8 shows a result of FFT of the output signal of the mixer 34 by the signal analyzer 36. As described with reference to Fig. 6, the frequency fd changes according to the distance from the radar apparatus 12 to the reflective object R. Therefore, it is possible to estimate the distance from the radar apparatus 12 to the reflective object R, by detecting the frequency at which the signal level is maximized in the frequency domain.

In the graph of Fig. 8, the frequency on the horizontal axis may be considered as a distance.

The storage device 37 stores the signal level of the received radar wave, and the position of the reflective object R, which are determined by the signal analyzer 36.

The obstacle identifier 38 determines whether the reflective object R is an obstacle, as described above, based on the signal level of the received radar wave stored in the storage device 37, and notifies the controller 39 of the determined result.

The controller 39 controls overall operations of the radar apparatus 12. The controller 39 controls generation of a radio frequency signal by the signal generator 33. As described with reference to Figs. 4 and 5, the controller 39 controls the antenna device 30 to set a plurality of radiation patterns different from each other. The controller 39 sets the first radiation pattern P1 and the second radiation pattern P2 for the antenna device 30, at a time interval sufficiently shorter than the moving speed of the vehicular apparatus 1, and transmits and receives radar waves. The controller 39 controls the positioning of the reflective object R by the signal analyzer 36. The controller 39 controls the antenna device 30 to change the radiation pattern, when the signal analyzer 36 estimates the direction of arrival of the received radar wave. The obstacle identifier 38 notifies the controller 39 of the determined result as to whether or not the reflective object R is an obstacle, and then the controller 39 notifies the control device 11 of the vehicular apparatus 1, of the determined result.

Referring to Fig. 1, the vehicular apparatus 1 may be provided with a control device 11, a drive device 13, a steering device 14, and a communication device 15, in addition to the radar apparatus 12. The control device 11 controls overall operations of the vehicular apparatus 1. The drive device 13 moves the vehicular apparatus 1 at a certain speed under the control of the control device 11. The steering device 14 controls the direction of the vehicular apparatus 1 under the control of the control device 11. The communication device 15 receives control signals from the server apparatus 2, and transmits obstacle information detected by the radar apparatus 12 to the server apparatus 2.

When an obstacle is detected by the radar apparatus 12, the control device 11 may change the route of the vehicular apparatus 1 so as to avoid the obstacle, or may stop the vehicular apparatus 1.

Referring to Fig. 1, the server apparatus 2 is provided with a control device 21, a communication device 22, an input device 23, a storage device 24, and a display device 25. The control device 21 controls overall operations of the server apparatus 2. The communication device 22 transmits the control signals to the vehicular apparatus 1, and receives the obstacle information from the vehicular apparatus 1. The input device 23 includes a keyboard, a pointing device, and the like, and receives user inputs. The storage device 24 stores the obstacle information received from the vehicular apparatus 1. The display device 25 displays the obstacle information received from the vehicular apparatus 1.

The control device 21 of the server apparatus 2 may generate a map of an area where the vehicular apparatus 1 can move, based on the obstacle information received from the vehicular apparatus 1.

The server apparatus 2 may transmit control signals to a plurality of vehicular apparatuses 1, and receive obstacle information from the plurality of vehicular apparatuses 1.

### [OPERATION EXAMPLE OF EMBODIMENT]

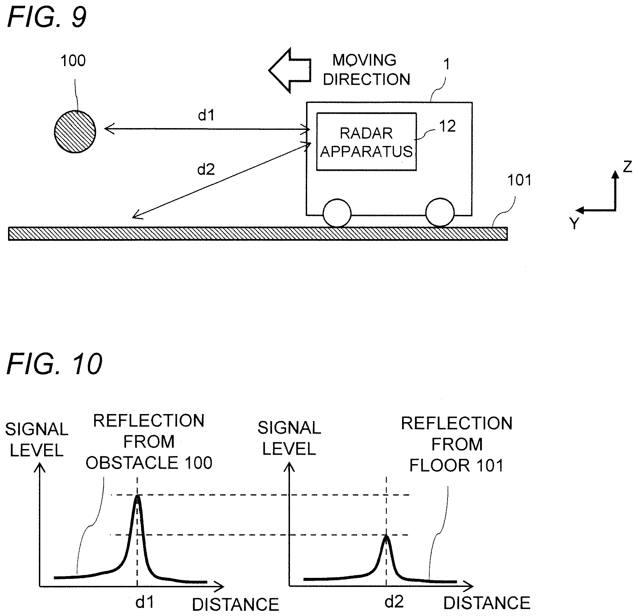

Fig. 9 is a diagram for explaining a schematic operation of the radar apparatus 12 of Fig. 1. In the example of Fig. 9, the vehicular apparatus 1 moves or stops on the floor 101. An obstacle 100 exists in front of the vehicular apparatus 1 at a distance d1 from the vehicular apparatus 1. The radar wave emitted from the radar apparatus 12 is reflected by the obstacle 100, and then enters the radar apparatus 12 again. Furthermore, the radar wave emitted from the radar apparatus 12 is reflected by a position on the floor 101 at a distance d2 from the vehicular apparatus 1, and enters the radar apparatus 12 again.

Fig. 10 is a waveform diagram illustrating waveforms of radar waves reflected by the obstacle 100 and the floor 101 of Fig. 9. The distance from the radar apparatus 12 to the reflective object (the obstacle 100 or the floor 101) can be estimated based on the peak of the signal level of the received radar wave. In general, the signal level of the radar wave reflected by the obstacle 100 having a surface crossing the moving direction of the vehicular apparatus 1 is larger than the signal level of the radar wave reflected by the floor 101 having a surface parallel to the moving direction of the vehicular apparatus 1.

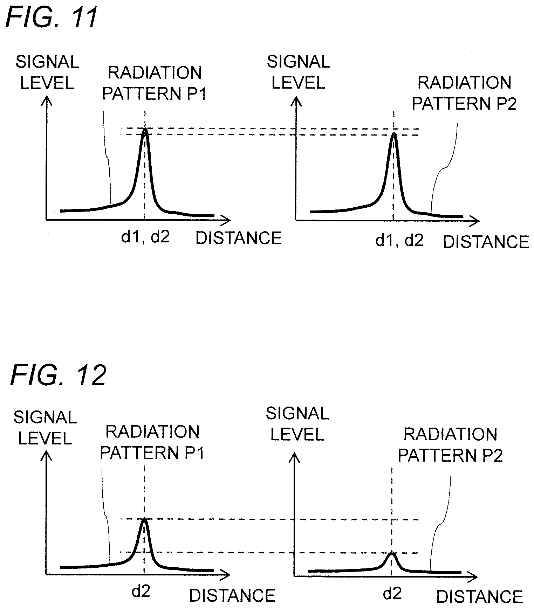

Fig. 11 is a waveform diagram illustrating waveforms of radar waves received with the radiation patterns P1 and P2 being set for the antenna device 30, respectively, when the obstacle 100 of Fig. 9 exists. In this case, the received radar wave includes both the radar wave reflected by the obstacle 100, and the radar wave reflected by the floor 101. In the example of Fig. 11, it is assumed that the distances d1 and d2 of Fig. 9 are equal to each other. As described above, the gain of the side lobe SL1 of the radiation pattern P1 and the gain of the side lobe SL2 of the radiation pattern P2 are different from each other. Therefore, the signal levels of the radar waves reflected by the floor 101, which are received with the radiation patterns P1 and P2 being set for the antenna device 30, respectively, are different from each other due to the difference in gain between the side lobes SL1 and SL2. However, as described above, the radiation patterns P1 and P2 have the gains of the main lobes ML1 and ML2, which are sufficiently larger than the gains of the side lobes SL1 and SL2, and which are substantially equal to each other. Therefore, the signal levels of the radar waves received with the radiation patterns P1 and P2 being set for the antenna device 30 are mainly determined according to the gains of the main lobes ML1 and ML2, and are substantially equal to each other.

Fig. 12 is a waveform diagram illustrating waveforms of radar waves received with the radiation patterns P1 and P2 being set for the antenna device 30, respectively, when the obstacle 100 of Fig. 9 does not exist. In this case, the received radar wave includes only the radar wave reflected by the floor 101. Therefore, the signal levels of the radar waves received with the radiation patterns P1 and P2 being set for the antenna device 30 are mainly determined according to the gains of the side lobes SL1 and SL2, and are significantly different from each other due to the difference between the gains of the side lobes SL1 and SL2.

As illustrated in Figs. 11 and 12, the radar apparatus 12 according to the embodiment can determine whether the obstacle 100 or the floor 101 is detected, based on the waveforms of the radar waves received when the different radiation patterns P1 and P2 are set for the antenna device 30.

The antenna device 30 may be mounted on the vehicular apparatus 1 such that the side lobes SL1 and SL2 of the antenna device 30 are directed not only to the floor 101, but also to other structures having a surface parallel to the moving direction of the vehicular apparatus 1, such as ceiling or wall.

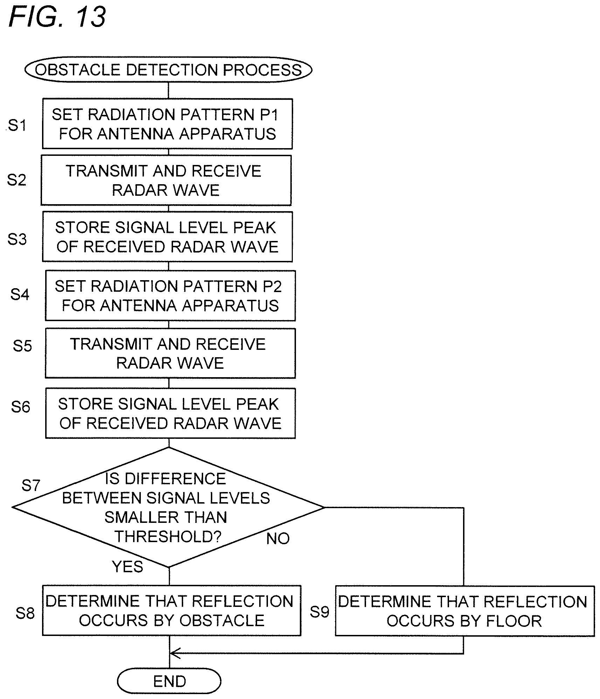

Fig. 13 is a flowchart illustrating obstacle detection process executed by the radar apparatus 12 of Fig. 1.

In step S1, the controller 39 sets the radiation pattern P1 for the antenna device 30. In step S2, the controller 39 transmits and receives a radar wave using the antenna device 30. In step S3, the signal analyzer 36 detects a signal level of the received radar wave, and stores a peak of the signal level in the storage device 37.

In step S4, the controller 39 sets the radiation pattern P2 for the antenna device 30. In step S5, the controller 39 transmits and receives a radar wave via the antenna device 30. In step S6, the signal analyzer 36 detects a signal level of the received radar wave, and stores a peak of the signal level in the storage device 37.

In step S7, the obstacle identifier 38 reads the peaks of the signal levels corresponding to the radiation patterns P1 and P2, from the storage device 37, and determines whether or not the difference between the peaks of the signal levels is smaller than the threshold; if YES, the process proceeds to step S8, and if NO, the process proceeds to step S9. The threshold may be a predetermined value based on the difference between the gain of the side lobe SL1 of the radiation pattern P1 and the gain of the side lobe SL2 of the radiation pattern P2. Furthermore, the threshold may be dynamically changed, based on a signal-to-noise ratio of the received radar wave, a detected result of an obstacle, and the like.

In step S8, the obstacle identifier 38 determines that the radar wave reflected by the obstacle 100 has been received. In step S9, the obstacle identifier 38 determines that the radar wave reflected by the floor 101 has been received. Thereafter, the obstacle identifier 38 notifies the controller 39 of the determined result.

According to the radar apparatus 12 of the embodiment, by referring to the signal levels of the radar waves received when the radiation patterns P1 and P2 different from each other are set for the antenna device 30, respectively, it is possible to more reliably distinguish the obstacle 100 from other structures than the prior art, without narrowing the range in which the obstacle 100 can be detected.

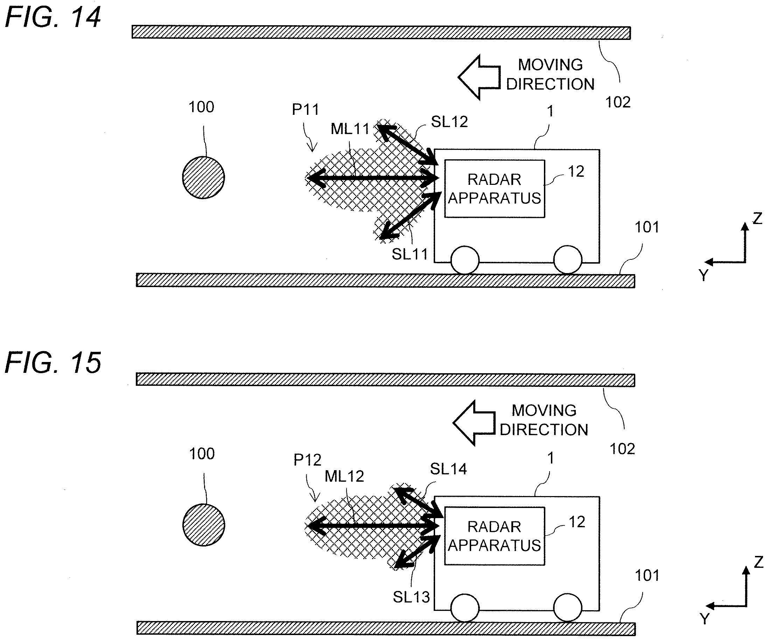

Next, operations of the radar apparatus 12 according to modified embodiments of the embodiment will be described with reference to Figs. 14 to 21.

An operation of the radar apparatus 12 according to a first modified embodiment of the embodiment will be described with reference to Figs. 14 and 15. Fig. 14 is a side view illustrating a radiation pattern P11 set for the antenna device 30 of Fig. 1. Fig. 15 is a side view illustrating a radiation pattern P12 set for the antenna device 30 of Fig. 1.

Referring to Fig. 14, the first radiation pattern P11 has a main lobe ML11 in a first direction, a side lobe SL11 with a first gain in a second direction different from the first direction, and a side lobe SL12 with a third gain in a third direction different from the first and second directions. Referring to Fig. 15, the second radiation pattern P12 has a main lobe ML12 in the first direction, a side lobe SL13 in the second direction with a second gain different from the first gain, and a side lobe SL14 in the third direction with a fourth gain different from the third gain.

In the radiation patterns P11 and P12, each of the main lobes ML11 and ML12 indicates a certain angular range including an azimuth angle at which the gain is maximized. In the radiation patterns P11 and P12, each of the side lobes SL11 to SL14 indicates a certain angular range including an azimuth angle at which the gain is the second largest after the main lobes ML11 and ML12. The radiation patterns P11 and P12 are set such that the gains of the main lobes ML11 and ML12 are sufficiently larger than the gains of the side lobes SL11 to SL14.

The examples of Figs. 14 and 15 illustrate a case where the gains of the main lobes ML11 and ML12 of the radiation patterns P11 and P12 are substantially equal to each other. In addition, the examples of Figs. 14 and 15 illustrate a case where the gain of the side lobe SL13 of the radiation pattern P12 is smaller than the gain of the side lobe SL11 of the radiation pattern P11. In addition, the examples of Figs. 14 and 15 illustrate a case where the gain of the side lobe SL14 of the radiation pattern P12 is smaller than the gain of the side lobe SL12 of the radiation pattern P11.

In addition, the examples of Figs. 14 and 15 illustrate a case where the antenna device 30 is mounted on the vehicular apparatus 1 such that the main lobes ML11 and ML12 of the antenna device 30 are parallel to the moving direction of the vehicular apparatus 1. In addition, the examples of Figs. 14 and 15 illustrate a case where the antenna device 30 is mounted on the vehicular apparatus 1 such that the side lobes SL11 and SL13 of the antenna device 30 are directed downward to the floor 101 in front of the vehicular apparatus 1, and the side lobes SL12 and SL14 of the antenna device 30 are directed upward to the ceiling 102 in front of the vehicular apparatus 1.

By using the radiation pattern P11 of Fig. 14 and the radiation pattern P12 of Fig. 15, it is possible to distinguish the obstacle 100 from the floor 101, and further distinguish the obstacle from the ceiling 102.

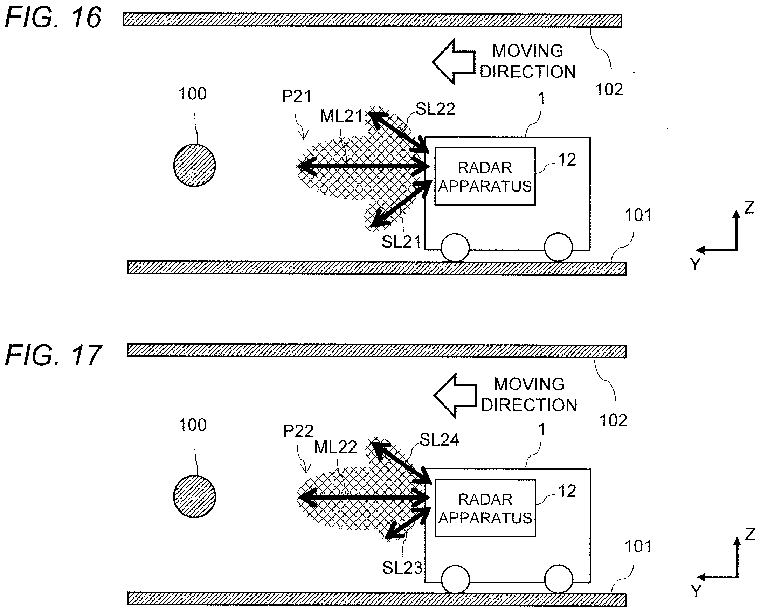

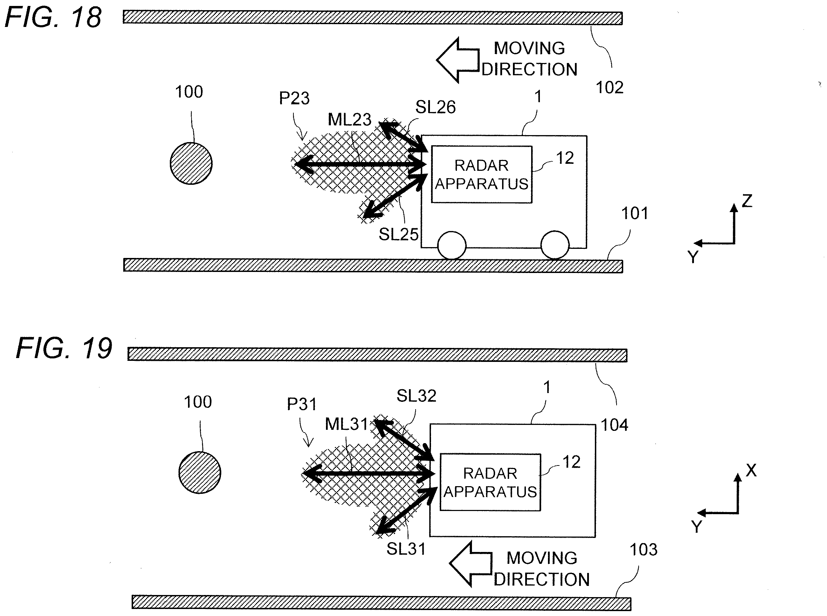

An operation of the radar apparatus 12 according to a second modified embodiment of the embodiment will be described with reference to Figs. 16 to 18. Fig. 16 is a side view illustrating a radiation pattern P21 set for the antenna device 30 of Fig. 1. Fig. 17 is a side view illustrating a radiation pattern P22 set for the antenna device 30 of Fig. 1. Fig. 18 is a side view illustrating a radiation pattern P23 set for the antenna device 30 of Fig. 1.

The antenna device 30 has the radiation patterns P21 to P23 different from each other. Referring to Fig. 16, the first radiation pattern P21 has a main lobe ML21 in a first direction, a side lobe SL21 with a first gain in a second direction different from the first direction, and a side lobe SL22 with a third gain in a third direction different from the first and second directions. Referring to Fig. 17, the second radiation pattern P22 has a main lobe ML22 in the first direction, a side lobe SL23 in the second direction with a second gain different from the first gain, and a side lobe SL24 in the third direction. Referring to Fig. 18, the third radiation pattern P23 has a main lobe ML23 in the first direction, a side lobe SL25 in the second direction, and a side lobe SL26 in the third direction with a fourth gain different from the third gain.

In the radiation patterns P21 to P23, each of the main lobes ML21 to ML23 indicates a certain angular range including an azimuth angle at which the gain is maximized. In the radiation patterns P21 to P23, each of the side lobes SL21 to SL26 indicates a certain angular range including an azimuth angle at which the gain is the second largest after the main lobes ML21 to ML23. The radiation patterns P21 to P23 are set such that the gains of the main lobes ML21 to ML23 are sufficiently larger than the gains of the side lobes SL21 to SL26.

The examples of Figs. 16 to 18 illustrate a case where the gains of the main lobes ML21 to ML23 of the radiation patterns P21 to P23 are substantially equal to each other. In addition, the examples of Figs. 16 to 18 illustrate a case where the gain of the side lobe SL21 of the radiation pattern P21 and the gain of the side lobe SL25 of the radiation pattern P23 are substantially equal to each other, and the gain of the side lobe SL23 of the radiation pattern P22 is smaller than the gain of the side lobe SL21 of the radiation pattern P21 and the gain of the side lobe SL25 of the radiation pattern P23. In addition, the examples of Figs. 16 to 18 illustrate a case where the gain of the side lobe SL22 of the radiation pattern P21 and the gain of the side lobe SL24 of the radiation pattern P22 are substantially equal to each other, and the gain of the side lobe SL26 of the radiation pattern P23 is smaller than the gain of the side lobe SL22 of the radiation pattern P21 and the gain of the side lobe SL24 of the radiation pattern P22.

The examples of Figs. 16 to 18 illustrate a case where the antenna device 30 is mounted on the vehicular apparatus 1 such that the main lobes ML21 to ML23 of the antenna device 30 are parallel to the moving direction of the vehicular apparatus 1. In addition, the examples of Figs. 16 to 18 illustrate a case where the antenna device 30 is mounted on the vehicular apparatus 1 such that the side lobes SL21, SL23, and SL25 of the antenna device 30 are directed downward to the floor 101 in front of the vehicular apparatus 1, and the side lobes SL22, SL24, and SL26 of the antenna device 30 are directed upward to the ceiling 102 in front of the vehicular apparatus 1.

The signal analyzer 36 detects first to third signal levels, the first signal level indicating a signal level of a radar wave received when the first radiation pattern P21 is set for the antenna device 30, the second signal level indicating a signal level of a radar wave received when the second radiation pattern P22 is set for the antenna device 30, and the third signal level indicating a signal level of a radar wave received when the third radiation pattern P23 is set for the antenna device 30. When the differences among the first to third signal levels are smaller than a threshold, the obstacle identifier 38 determines that the reflective object is an obstacle, and otherwise, the obstacle identifier 38 determines that the reflective object is not an obstacle.

By using the radiation patterns P21 to P23 of Figs. 16 to 18, it is possible to distinguish the obstacle 100 from the floor 101, and further distinguish the obstacle from the ceiling 102.

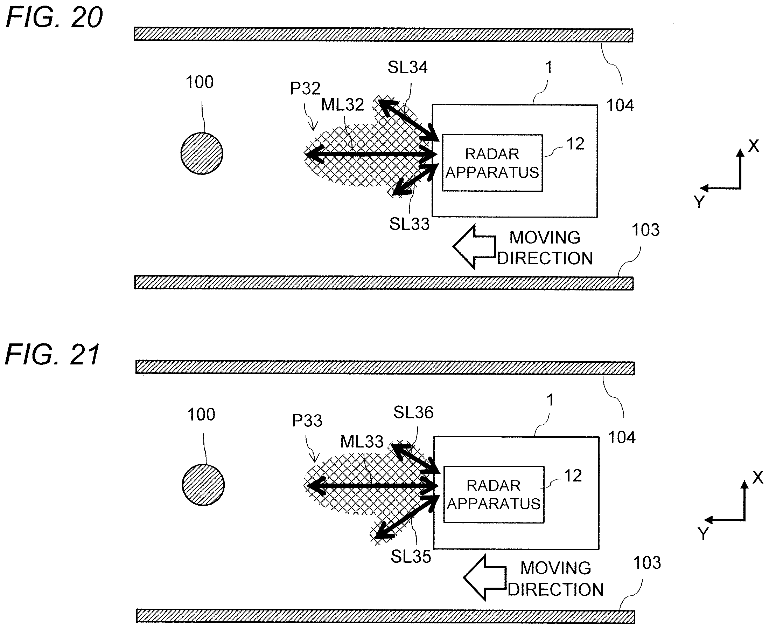

An operation of the radar apparatus 12 according to a third modified embodiment of the embodiment will be described with reference to Figs. 19 to 21. Fig. 19 is a top view illustrating a radiation pattern P31 set for the antenna device 30 of Fig. 1. Fig. 20 is a top view illustrating a radiation pattern P32 set for the antenna device 30 of Fig. 1. Fig. 21 is a top view illustrating a radiation pattern P33 set for the antenna device 30 of Fig. 1.

The antenna device 30 has the radiation patterns P31 to P33 different from each other. Referring to Fig. 19, the first radiation pattern P31 has a main lobe ML31 in a first direction, a side lobe SL31 with a first gain in a second direction different from the first direction, and a side lobe SL32 with a third gain in a third direction different from the first and second directions. Referring to Fig. 20, the second radiation pattern P32 has a main lobe ML32 in the first direction, a side lobe SL33 in the second direction with a second gain different from the first gain, and a side lobe SL34 in the third direction. Referring to Fig. 21, the third radiation pattern P33 has a main lobe ML33 in the first direction, a side lobe SL35 in the second direction, and a side lobe SL36 in the third direction with a fourth gain different from the third gain.

In the radiation patterns P31 to P33, each of the main lobes ML31 to ML33 indicates a certain angular range including an azimuth angle at which the gain is maximized. In the radiation patterns P31 to P33, each of the side lobes SL31 to SL36 indicates a certain angular range including an azimuth angle at which the gain is the second largest after the main lobes ML31 to ML33. The radiation patterns P31 to P33 are set such that the gains of the main lobes ML31 to ML33 are sufficiently larger than the gains of the side lobes SL31 to SL36.

The examples of Figs. 19 to 21 illustrate a case where the gains of the main lobes ML31 to ML33 of the radiation patterns P31 to P33 are substantially equal to each other. In addition, the examples of Figs. 19 to 21 illustrate a case where the gain of the side lobe SL31 of the radiation pattern P31 and the gain of the side lobe SL35 of the radiation pattern P33 are substantially equal to each other, and the gain of the side lobe SL33 of the radiation pattern P32 is smaller than the gain of the side lobe SL31 of the radiation pattern P31 and the gain of the side lobe SL35 of the radiation pattern P33. In addition, the examples of Figs. 19 to 21 illustrate a case where the gain of the side lobe SL32 of the radiation pattern P31 and the gain of the side lobe SL34 of the radiation pattern P32 are substantially equal to each other, and the gain of the side lobe SL36 of the radiation pattern P33 is smaller than the gain of the side lobe SL32 of the radiation pattern P31 and the gain of the side lobe SL34 of the radiation pattern P32.

The examples of Figs. 19 to 21 illustrate a case where the antenna device 30 is mounted on the vehicular apparatus 1 such that the main lobe ML of the antenna device 30 is parallel to the moving direction of the vehicular apparatus 1. In addition, the examples of Figs. 19 to 21 illustrate a case where the antenna device 30 is mounted on the vehicular apparatus 1 such that the side lobes SL31, SL33, and SL35 of the antenna device 30 are directed to left wall 103 and in front of the vehicular apparatus 1, and the side lobes SL32, SL34, and SL36 of the antenna device 30 are directed to a right wall 104 and in front of the vehicular apparatus 1.

By using the radiation patterns P31 to P33 of Figs. 19 to 21, it is possible to distinguish the obstacle 100 from the wall 103, and further distinguish the obstacle from the wall 104.

The antenna device 30 may be configured so as to use both a set of the radiation patterns P21 to P23 of Figs. 16 to 18, and a set of the radiation patterns P31 to P33 of Figs. 19 to 21. As a result, it is possible to distinguish the obstacle 100 from the floor 101, the ceiling 102, and the walls 103 and 104.

The radar apparatus 12 according to the embodiment may be mounted on a vehicular apparatus operable autonomously without communicating with the server apparatus 2. The radar apparatus 12 according to the embodiment may communicate with the radar apparatuses 12 of other vehicular apparatuses 1, and share information on obstacles and/or map. The radar apparatus 12 according to the embodiment may be mounted on, not limited to the autonomous vehicle, but an automobile or the like. Furthermore, the radar apparatus 12 according to the embodiment may be applied to a vehicular apparatus provided with a drive device, without a steering device, such as a train and an elevator.

### [ADVANTAGEOUS EFFECTS OF EMBODIMENT]

According to the radar apparatus 12 of the embodiment, by referring to the signal levels of the radar waves received when the first and second radiation patterns different from each other are set for the antenna device 30, respectively, it is possible to more reliably distinguish the obstacle from other structures than the prior art, without narrowing the range in which the obstacles can be detected.

Furthermore, according to the radar apparatus 12 of the embodiment, it is possible to identify other structures not serving as obstacles for the vehicular apparatus 1, such as ground, wall, ceiling, or other large structures, in addition to the floor.

### [MODIFIED EMBODIMENTS]

One of the transmitting antenna 31 and the receiving antenna 32 may have variable directivity, or both may have variable directivity. Furthermore, the transmitting antenna 31 and the receiving antenna 32 may share an antenna element(s).

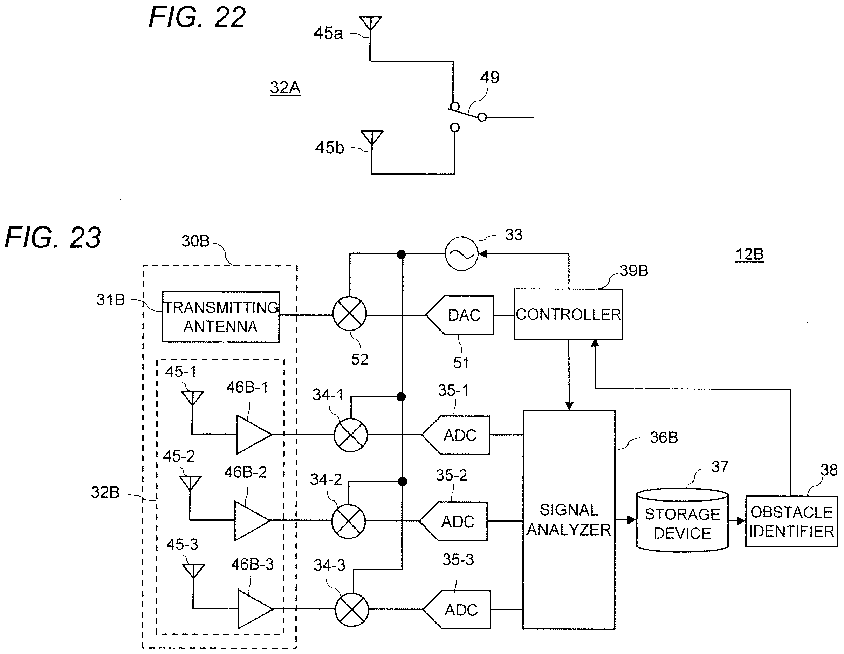

Fig. 22 is a circuit diagram illustrating a modified embodiment of the receiving antenna 32 of Fig. 1. A receiving antenna 32A of Fig. 22 is provided with a plurality of antenna elements 45a and 45b and a switch 49. The antenna elements 45a and 45b have first and second radiation patterns different from each other. The switch 49 selectively outputs received signals of the antenna elements 45a and 45b to a subsequent circuit, under the control of the controller 39. As a result, the receiving antenna 32A of Fig. 22 operates as a diversity antenna.

The transmitting antenna 31 may be also configured in a manner similar to that of Fig. 22.

Fig. 23 is a block diagram illustrating a modified embodiment of the radar apparatus 12 of Fig. 1. The radar apparatus according to the embodiment may generate a radar wave as a pulse signal, instead of the radar wave as the chirp signal. In addition, the radar apparatus according to the embodiment may change the amplitude and phase of the received radar wave by software signal processing, instead of changing the amplitude and the phase by variable gain amplifiers and phase shifters.

A radar apparatus 12B of Fig. 23 is provided with an antenna device 30B, a signal generator 33, mixers 34-1 to 34-3, analog/digital (AD) converters 35-1 to 35-3, a signal analyzer 36B, a storage device 37, an obstacle identifier 38, a controller 39B, a digital/analog (DA) converter 51, and a mixer 52.

The antenna device 30B is provided with a transmitting antenna 31B and a receiving antenna 32B.

The transmitting antenna 31B is configured as an omnidirectional antenna. Alternatively, the transmitting antenna 31B may be configured in a manner similar to that of the transmitting antenna 31 of Fig. 2 or the receiving antenna of Fig. 22.

The receiving antenna 32B is provided with antenna elements 45-1 to 45-3, and amplifiers 46B-1 to 46B-3. The antenna elements 45-1 to 45-3 of Fig. 23 are configured in a manner similar to that of the antenna elements 45-1 to 45-3 of Fig. 3. The amplifiers 46B-1 to 46B-3 amplify received signals of the antenna elements 45-1 to 45-3 with predetermined gains.

The signal generator 33 generates a radio frequency signal, and supplies the radio frequency signal to the mixers 52 and 34-1 to 34-3. The DA converter 51 generates a baseband pulse signal under the control of the controller 39B, and sends the baseband pulse signal to the mixer 52. The mixer 52 modulates the amplitude and phase of the radio frequency signal with the baseband pulse signal to generate a radio frequency pulse signal, and supplies the radio frequency pulse signal to the transmitting antenna 31B. In order to generate the radio frequency pulse signal, a switch may be used, instead of the DA converter, to modulate the amplitude of the radio frequency signal with the baseband pulse signal.

The transmitting antenna 31B emits the radio frequency pulse signal supplied by the mixer 52, as a radar wave, toward a space to be searched. The receiving antenna 32B receives the radar wave reflected by the reflective object R, and sends the radar wave to the mixers 34-1 to 34-3.

The mixers 34-1 to 34-3 mix the signals sent from the signal generator 33 and the receiving antenna 32B, and send the mixed signal to the AD converters 35-1 to 35-3.

The AD converters 35-1 to 35-3 convert the analog signals sent from the mixers 34-1 to 34-3, into digital signals, respectively, and send the digital signals to the signal analyzer 36B.

Based on the signals sent from the AD converters 35-1 to 35-3 (that is, a signals corresponding to the received radar wave), the signal analyzer 36B detects the signal level of the received radar wave, and determines the position of the reflective object R with respect to the position of the antenna device 30B (that is, the position of the radar apparatus 12B), under the control of the controller 39B. The signal analyzer 36B converts the signals corresponding to the received radar wave, from time domain to frequency domain, for example, using a fast Fourier transform, and detects a signal level of the received radar wave in the frequency domain. The signal analyzer 36B detects the frequency of the received radar wave, and estimates the distance from the radar apparatus 12B to the reflective object R, based on the difference between the frequency of the transmitted radar wave and the frequency of the received radar wave. In addition, the signal analyzer 36B estimates the direction of arrival of the received radar wave (that is, the direction of the reflective object R with respect to the radar apparatus 12B), for example, using an arrival wave estimation algorithm, such as beamformer algorithm or multiple signal classification (MUSIC) algorithm. The signal analyzer 36B determines the position of the reflective object R by estimating the distance and the direction of arrival.

The signal analyzer 36B individually processes the received signals of the antenna elements 45-1 to 45-3. Therefore, the signal analyzer 36B may individually estimate the distances from the reflective object R to the antenna elements 45-1 to 45-3. Furthermore, the signal analyzer 36B may calculate an average of the distances estimated for the respective antenna elements 45-1 to 45-3, as the estimated distance from the radar apparatus 12 to the reflective object R.

The signal analyzer 36B changes the amplitudes and phases of the received signals of the antenna elements 45-1 to 45-3 by software signal processing, and equivalently changes the radiation pattern of the receiving antenna 32B.

The storage device 37 stores the signal level of the received radar wave, and the position of the reflective object R, which are determined by the signal analyzer 36B.

The obstacle identifier 38 determines whether or not the reflective object R is an obstacle, as described above, based on the signal level of the received radar wave stored in the storage device 37, and notifies the controller 39B of the determined result.

The controller 39B controls overall operations of the radar apparatus 12B.

As described above, the radar apparatus 12B can generate the radar wave as the pulse signal. Furthermore, the radar apparatus 12B can change the amplitude and phase of the received radar wave by software signal processing.

The described embodiment and modified embodiments may be combined arbitrarily. For example, the radar apparatus 12 of Fig. 1 may generate a radar wave as a pulse signal, using the DA converter 51 and the mixer 52, in a manner similar to that of the radar apparatus 12B of Fig. 23. Furthermore, the radar apparatus of Fig. 1 may change the amplitude and the phase of the received radar wave by software signal processing, using the receiving antenna 32B, the mixers 34-1 to 34-3, the AD converters 35-1 to 35-3, and the signal analyzer 36B, in a manner similar to that of the radar apparatus 12B of Fig. 23, instead of the receiving antenna 32, the mixer 34, the AD converter 35, and the signal analyzer 36.

In addition, the radar apparatus according to the embodiment may be configured to generate a continuous wave (CW) signal having a predetermined frequency as a radio frequency signal, or may be configured to generate an FM-CW signal having a periodically varying frequency.

### [SUMMARY OF EMBODIMENTS]

The radar apparatus and the vehicular apparatus according to the aspects of the present disclosure may be expressed as follows.

According to a radar apparatus 12 of a first aspect of the present disclosure, the radar apparatus 12 is provided with: an antenna device 30 having variable directivity; a signal analyzer 36 configured to detect a signal level of a radar wave transmitted via the antenna device 30, reflected by a reflective object, and then received via the antenna device 30, and determine a position of the reflective object with respect to a position of the antenna device 30; and an obstacle identifier 38 configured to determine whether or not the reflective object is an obstacle, based on the signal level of the received radar wave, The antenna device 30 has first and second radiation patterns different from each other, the first radiation pattern having a first main lobe in a first direction, and a first side lobe with a first gain in a second direction different from the first direction, and the second radiation pattern having a second main lobe in the first direction, and a second side lobe in the second direction with a second gain different from the first gain. The signal analyzer 36 is configured to detect a first signal level indicating a signal level of a radar wave received when the first radiation pattern is set for the antenna device 30, and detect a second signal level indicating a signal level of a radar wave received when the second radiation pattern is set for the antenna device 30. When a difference between the first and second signal levels is smaller than a predetermined threshold, the obstacle identifier 38 is configured to determine that the reflective object is an obstacle, and when the difference between the first and second signal levels is equal to or larger than the threshold, the obstacle identifier 38 is configured to determine that the reflective object is not an obstacle.

According to a radar apparatus 12 of a second aspect of the present disclosure, the radar apparatus 12 of the first aspect is further configured as follows. The first radiation pattern further has a third side lobe with a third gain in a third direction different from the first and second directions, and the second radiation pattern further has a fourth side lobe in the third direction with a fourth gain different from the third gain.

According to a radar apparatus 12 of a third aspect of the present disclosure, the radar apparatus 12 of the first aspect is further configured as follows. The antenna device 30 further has a third radiation pattern different from the first and second radiation patterns, the first radiation pattern further having a fifth side lobe with a third gain in a third direction different from the first and second directions, and the third radiation pattern having a third main lobe in the first direction, a sixth side lobe in the second direction, and a seventh side lobe in the third direction with a fourth gain different from the third gain. The signal analyzer 36 is configured to detect a third signal level indicating a signal level of a radar wave received when the third radiation pattern is set for the antenna device 30. When differences among the first to third signal levels are smaller than the threshold, the obstacle identifier 38 is configured to determine that the reflective object is an obstacle, and when the differences among the first to third signal levels are equal to or larger than the threshold, the obstacle identifier 38 is configured to determine that the reflective object is not an obstacle.

According to a vehicular apparatus 1 of a fourth aspect of the present disclosure, the vehicular apparatus 1 is provided with the radar apparatus 12 of one of the first to third aspects of the present disclosure.

According to the vehicular apparatus 1 of a fifth aspect of the present disclosure, the vehicular apparatus 1 of the fourth aspect is further configured as follows. The antenna device 30 is mounted on the vehicular apparatus 1 such that a main lobe of the antenna device 30 is parallel to a moving direction of the vehicular apparatus 1. When a difference between the first and second signal levels is equal to or larger than a predetermined threshold, the obstacle identifier 38 determines that the reflective object is not an obstacle, but a structure having a surface substantially parallel to the moving direction of the vehicular apparatus 1.

### INDUSTRIAL APPLICABILITY

The radar apparatus according to the aspect of the present disclosure is applicable to, for example, a vehicular apparatus, such as an automatic guided vehicle (AGV) or an autonomous intelligent vehicle (AIV).

### REFERENCE SIGNS LIST

1: VEHICULAR APPARATUS
2: SERVER APPARATUS
11: CONTROL DEVICE
12, 12B: RADAR APPARATUS
13: DRIVE DEVICE
14: STEERING DEVICE
15: COMMUNICATION DEVICE
21: CONTROL DEVICE
22: COMMUNICATION DEVICE
23: INPUT DEVICE
24: STORAGE DEVICE
25: DISPLAY DEVICE
30, 30B: ANTENNA DEVICE
31, 31B: TRANSMITTING ANTENNA
32, 32A, 32B: RECEIVING ANTENNA
33: SIGNAL GENERATOR
34, 34-1 to 34-3: MIXER
35, 35-1 to 35-3: ANALOG/DIGITAL (AD) CONVERTER
36, 36B: SIGNAL ANALYZER
37: STORAGE DEVICE
38: OBSTACLE IDENTIFIER
39, 39B: CONTROLLER
41: DIVIDER
42-1 to 42-3: PHASE SHIFTER
43-1 to 43-3: AMPLIFIER
44-1 to 44-3, 45-1 to 45-3, 45a, 45b: ANTENNA ELEMENT
46-1 to 46-3, 46B-1 to 46B-3: AMPLIFIER
47-1 to 47-3: PHASE SHIFTER
48: COMBINER
49: SWITCH
51: DIGITAL/ANALOG (DA) CONVERTER
52: MIXER
100: OBSTACLE
101: FLOOR
102: CEILING
103, 104: WALL
R: REFLECTIVE OBJECT

## Claims

1. A radar apparatus comprising:
an antenna device having variable directivity;
a signal analyzer configured to detect a signal level of a radar wave transmitted via the antenna device, reflected by a reflective object, and then received via the antenna device, and determine a position of the reflective object with respect to a position of the antenna device; and
an obstacle identifier configured to determine whether or not the reflective object is an obstacle, based on the signal level of the received radar wave,
wherein the antenna device has first and second radiation patterns different from each other, the first radiation pattern having a first main lobe in a first direction, and a first side lobe with a first gain in a second direction different from the first direction, and the second radiation pattern having a second main lobe in the first direction, and a second side lobe in the second direction with a second gain different from the first gain,
wherein the signal analyzer is configured to detect a first signal level indicating a signal level of a radar wave received when the first radiation pattern is set for the antenna device, and detect a second signal level indicating a signal level of a radar wave received when the second radiation pattern is set for the antenna device, and
wherein, when a difference between the first and second signal levels is smaller than a predetermined threshold, the obstacle identifier is configured to determine that the reflective object is an obstacle, and when the difference between the first and second signal levels is equal to or larger than the threshold, the obstacle identifier is configured to determine that the reflective object is not an obstacle.

2. The radar apparatus as claimed in claim 1,
wherein the first radiation pattern further has a third side lobe with a third gain in a third direction different from the first and second directions, and the second radiation pattern further has a fourth side lobe in the third direction with a fourth gain different from the third gain.

3. The radar apparatus as claimed in claim 1,
wherein the antenna device further has a third radiation pattern different from the first and second radiation patterns, the first radiation pattern further having a fifth side lobe with a third gain in a third direction different from the first and second directions, and the third radiation pattern having a third main lobe in the first direction, a sixth side lobe in the second direction, and a seventh side lobe in the third direction with a fourth gain different from the third gain,
wherein the signal analyzer is configured to detect a third signal level indicating a signal level of a radar wave received when the third radiation pattern is set for the antenna device, and
wherein, when differences among the first to third signal levels are smaller than the threshold, the obstacle identifier is configured to determine that the reflective object is an obstacle, and when the differences among the first to third signal levels are equal to or larger than the threshold, the obstacle identifier is configured to determine that the reflective object is not an obstacle.

4. A vehicular apparatus comprising the radar apparatus as claimed in any one of claims 1 to 3.

5. The vehicular apparatus as claimed in claim 4,
wherein the antenna device is mounted on the vehicular apparatus such that a main lobe of the antenna device is parallel to a moving direction of the vehicular apparatus, and
wherein, when a difference between the first and second signal levels is equal to or larger than a predetermined threshold, the obstacle identifier determines that the reflective object is not an obstacle, but a structure having a surface substantially parallel to the moving direction of the vehicular apparatus.
